# EUROPEAN PATENT APPLICATION

(11) **EP 4 550 877 A1**
(43) Date of publication of application: **07.05.2025**
(21) Application number: 23845073.8
(22) Date of filing: 01.06.2023
(51) Int. Cl.: H04W 28/02, H04W 72/12, H04W 48/08

(54) **DATA TRANSMISSION METHOD AND APPARATUS, STORAGE MEDIUM, AND PROGRAM PRODUCT**

(30) Priority: 27.07.2022 CN 202210890003
(71) Applicant: ZTE Corporation, Shenzhen, Guangdong 518057 (CN)
(72) Inventor: LU, Cuiling, Shenzhen, Guangdong 518057 (CN)
(74) Representative: Savi, Massimiliano
(86) International application number: PCT/CN2023/097879
(87) International publication number: WO 2024/021860

(57) **Abstract**

Provided in the present application are a data transmission method and apparatus, a storage medium, and a program product. The method comprises: acquiring service information of a terminal (S110); according to the service information, determining a slice type of a network slice corresponding to the terminal (S 120); according to the slice type, determining a channel access policy (S 130); and, according to the channel access policy, performing data transmission on the terminal (S140).

## Description

### CROSS-REFERENCE TO RELATED APPLICATION

This application is filed on the basis of Chinese patent application No. 202210890003.1 filed July 27, 2022, and claims priority to the Chinese patent application, the entire contents of which are incorporated herein by reference.

### TECHNICAL FIELD

Embodiments of the present disclosure relate to, but not limited to, the technical field of wireless communication, and more particularly, to a data transmission method and apparatus, a storage medium, and a program product.

### BACKGROUND

With the rapid development of intelligent terminal devices and Internet of Things (IoT), the penetration rate of wireless interconnection services is becoming higher, and data services increase sharply, leading to a lot of problems such as congestion collapse, data packet delay, and remote transmission jitter. However, "best-effort" transmission of traditional Ethernet can only reduce the end-to-end delay to tens of milliseconds. Many emerging businesses, such as intelligent driving, Internet of Vehicles, intelligent transportation, industrial control, smart agriculture, on-line surgery, and self-driving technologies, requires the end-to-end delay to be controlled between microseconds and a few milliseconds and requires the delay jitter to be controlled at the microsecond level. Therefore, there is an urgent need to establish a new generation network that can provide timely and accurate data transmission Quality of Service (QoS).

Currently, EasyMesh is an emerging technology for Wireless Local Area Network (WLAN). An EasyMesh network can be used to expand a WLAN network. In the EasyMesh network, one controller centrally manages other sub-nodes. However, the controller can only ensure load balancing among the sub-nodes, and cannot or is rarely able to provide support for deterministic QoS services.

### SUMMARY

Embodiments of the present disclosure provide a data transmission method and apparatus, a storage medium, and a program product.

In accordance with a first aspect of the present disclosure, an embodiment provides a data transmission method, including: acquiring service information of a terminal device; determining a slice category of a network slice corresponding to the terminal device according to the service information; determining a channel access policy according to the slice category; and performing data transmission with the terminal device according to the channel access policy.

In accordance with a second aspect of the present disclosure, an embodiment provides a data transmission apparatus, including: a memory, a processor, and a computer program stored in the memory and executable by the processor, where the computer program, when executed by the processor, causes the processor to implement the data transmission method described above.

In accordance with a third aspect of the present disclosure, an embodiment provides a computer-readable storage medium, storing computer-executable instructions which, when executed by a processor, cause the processor to implement the data transmission method described above.

In accordance with a fourth aspect of the present disclosure, an embodiment provides a computer program product, including a computer program or computer instructions stored in a computer-readable storage medium, where the computer program or computer instructions, when read from the computer-readable storage medium and executed by a processor of a computer device, causes the computer device to implement the data transmission method described above.

### BRIEF DESCRIPTION OF DRAWINGS

FIG. 1 is a schematic diagram of a network system configured for executing a data transmission method according to an embodiment of the present disclosure;
FIG. 2 is a schematic diagram of a hierarchical structure of a network slice according to an embodiment of the present disclosure;
FIG. 3 is a schematic structural diagram of an Access Point (AP) controller according to an embodiment of the present disclosure;
FIG. 4 is a schematic structural diagram of an AP agent according to an embodiment of the present disclosure;
FIG. 5 is a flowchart of a data transmission method according to an embodiment of the present disclosure;
FIG. 6 is a flowchart of an implementation of S120 in FIG. 5;
FIG. 7 is a flowchart of an implementation of S130 in FIG. 5;
FIG. 8 is a flowchart of an implementation of S140 in FIG. 5;
FIG. 9 is a flowchart of another implementation of S140 in FIG. 5;
FIG. 10 is a flowchart of a data transmission method according to another embodiment of the present disclosure;
FIG. 11 is a flowchart of still another implementation of S140 in FIG. 5; and
FIG. 12 is a schematic structural diagram of a data transmission apparatus according to another embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the embodiments described herein are merely used for illustrating the present disclosure, and are not intended to limit the present disclosure.

Although logical orders have been shown in the flowcharts, in some cases, the steps shown or described may be performed in an order different from the orders as shown in the flowcharts. In the specification, claims, and the description of the accompanying drawings, the term "two or more" (plurality of or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first", "second" and the like are merely used for distinguishing technical features, and are not intended to indicate or imply relative importance, or implicitly point out the number of the indicated technical features, or implicitly point out the order of the indicated technical features.

The present disclosure provides a data transmission method and apparatus, a storage medium, and a program product. First, service information of a terminal device is acquired. Then, a slice category of a network slice corresponding to the terminal device is determined according to the service information. Afterward, a channel access policy is determined according to the slice category. Finally, data transmission is performed with the terminal device according to the channel access policy. In other words, different network slices are determined according to different service information, corresponding channel access policies are determined for terminal devices of the different network slices, and data transmission is performed with the terminal devices according to the corresponding channel access policies. As such, an objective of providing deterministic services for different terminal devices is achieved. Therefore, the embodiments of the present disclosure can provide support for deterministic services in WLANs.

It should be noted that in the related art, two access category queues are introduced to transmit delay-sensitive data and non-delay-sensitive data to reduce the transmission delay of the delay-sensitive data. However, this scheme can only solve the delay problem of delay-sensitive data, fails to comprehensively consider QoS guarantee in Basic Service Set (BSS) and Overlapping Basic Service Set (OBSS) networks, and cannot provide deterministic network communication. In addition, the delay problem of delay-sensitive data is solved at the cost of affecting the throughput of other services, e.g., causing a decrease in service throughput.

In addition, in the related art, access terminal devices are classified using a WLAN virtual slicing technology according to services to form a virtual slice network, and the virtual slice network provides a deterministic service to a terminal device or WLAN router connected thereto. However, this scheme relies on the currently widely used Enhanced Distributed Channel Access (EDCA) technology, but cannot centrally manage all terminal devices in an EasyMesh application scenario and may even lead to the degradation of overall network performance.

Based on the above analysis, the embodiments of the present disclosure will be further described in detail below in conjunction with the accompanying drawings.

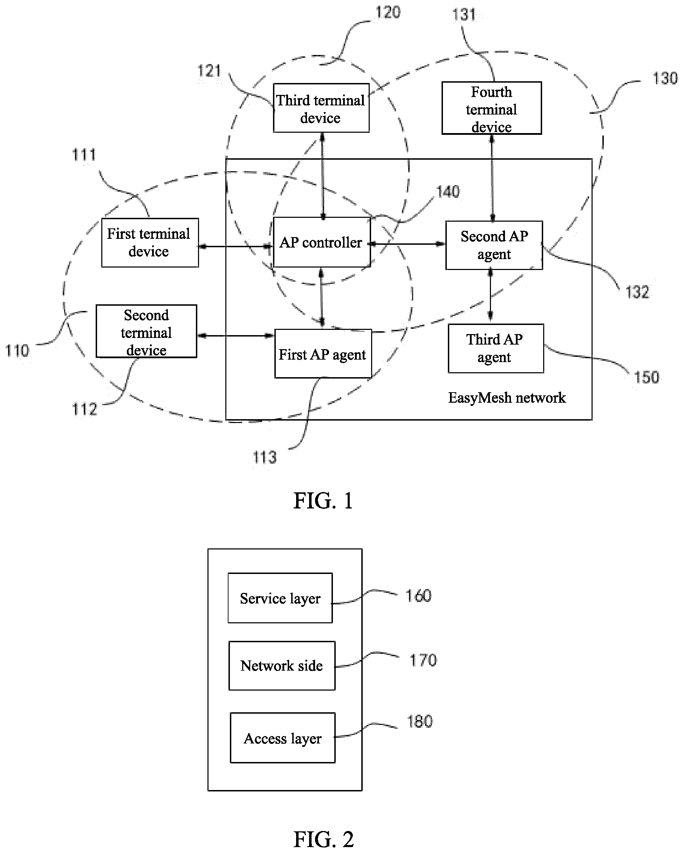

FIG. 1 is a schematic diagram of a network system configured for executing a data transmission method according to an embodiment of the present disclosure. Using an EasyMesh network as an example, the network system includes an AP controller 140, a plurality of AP agents, and a plurality of terminal devices (or stations (STAs)). The AP agents include a first AP agent 113, a second AP agent 132, and a third AP agent 150. The terminal devices include a first terminal device 111, a second terminal device 112, a third terminal device 121, and a fourth terminal device 131.

The first AP agent 113 and the second AP agent 132 are both connected to the AP controller 140. The third AP agent 150 is connected to the second AP agent 132. The first terminal device 111 and the third terminal device 121 are both connected to the AP controller 140. The second terminal device 112 is connected to the first AP agent 113. The fourth terminal device 131 is connected to the second AP agent 132.

In addition, the EasyMesh network is divided into three network slices, namely, a first network slice 110 including the AP controller 140, the first AP agent 113, the first terminal device 111 and the second terminal device 112, a second network slice 120 including the AP controller 140 and the third terminal device 121, and a third network slice 130 including the AP controller 140, the second AP agent 132, and the fourth terminal device 131.

In an implementation, the first terminal device 111, the second terminal device 112, the third terminal device 121, and the fourth terminal device 131 may correspond to different service types, such that different network slices can provide different deterministic services. For example, the service type corresponding to the first terminal device 111 and the service type corresponding to the second terminal device 112 are both delay-sensitive services, the service type corresponding to the third terminal device 121 is a packet loss rate type deterministic service, and the service type corresponding to the fourth terminal device 131 is a bandwidth type deterministic service. In this case, the first network slice 110 may provide a delay type deterministic service, the second network slice 120 provides a packet loss rate type deterministic service, and the third network slice 130 provides a bandwidth type deterministic service, which is not particularly limited herein.

It can be understood that the network system can be applied not only to an EasyMesh network, but also to an Ad hoc network, a BSS network, an OBSS network, or the like, which is not particularly limited herein. The Ad hoc network is a multi-hop, centerless self-organizing wireless network, also known as a Multi-hop Network, Infrastructureless Network, or Self-organizing Network. In the Ad hoc network, each terminal device can move and dynamically maintain communication with other terminal devices in an arbitrary manner.

Based on the network system shown in FIG. 1, FIG. 2 is a schematic diagram of a hierarchical structure of a network slice according to the present disclosure. The network slice includes a service layer 160, a network layer 170, and an access layer 180.

The service layer 160 may be configured for analyzing service information corresponding to a current terminal device, such as service type, service volume, and service duration. If the terminal device is not directly connected to the AP controller, the service information needs to be transmitted to the service layer 160. The service layer 160 analyzes and processes the service information to obtain service priority information, determines a slice category of the network slice according to the service priority information, and then transmits the slice category to the network layer 170.

The network layer 170 determines a slice identifier of the network slice according to the slice category, and labels data information corresponding to the terminal device with the slice identifier. The data information may include all data information such as uplink transmission data and downlink transmission data, etc. Then, the network layer 170 addresses and forwards the data information according to the slice identifier, i.e., first addresses and forwards the data information to an AP agent connected to the terminal device, and then addresses and forwards the data information to the terminal device.

The access layer 180 may be configured for allocating and reserving a network bandwidth and resource, where the resource may include a channel access duration, buffer space, etc. In addition, the access layer 180 may also periodically broadcast a time slot table and reserve a network bandwidth according to the time slot table, to provide compatibility with a WLAN while ensuring normal operation of the network slicing mechanism. The access layer 180 may also control the channel access priority and so on, which is not particularly limited herein.

It can be understood that the hierarchical structure may be a hierarchical structure of a first network slice, a hierarchical structure of a second network slice, or a hierarchical structure of a third network slice, which is not particularly limited herein.

It can be understood that in this embodiment, a virtual network slicing technology may be used to effectively control all terminal devices corresponding to the network slice through the service layer 160, the network layer 170, and the access layer 180, to ensure that each terminal device has a balanced opportunity to transmit data, thereby providing deterministic services for different terminal devices.

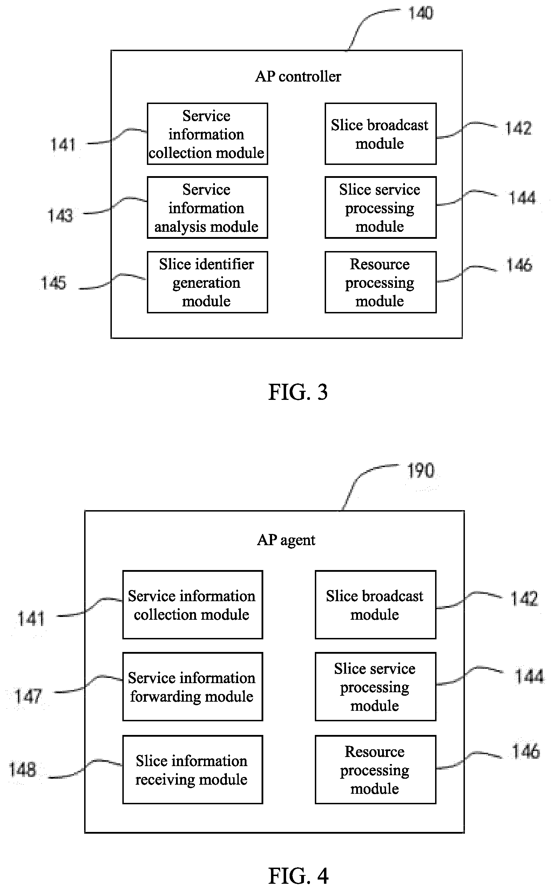

Based on the network system shown in FIG. 1, FIG. 3 is a schematic structural diagram of an AP controller 140 according to the present disclosure. The AP controller 140 includes a service information collection module 141, a service information analysis module 143, a slice identifier generation module 145, a slice broadcast module 142, a slice service processing module 144, and a resource processing module 146.

The service information collection module 141 is configured for collecting service information of all terminal devices accessing an EasyMesh network.

The service information analysis module 143 is configured for comprehensively analyzing and processing the service information of each terminal device, and determining a slice category of a network slice corresponding to a terminal device newly accessing the EasyMesh network.

The slice identifier generation module 145 is configured for determining a slice identifier of the network slice according to the slice category, for use in an access layer.

The slice broadcasting module 142 is configured for broadcasting network slice information managed by the AP controller 140 to AP agents 190 in network slices and terminal devices connected to the AP agents 190, such that the AP agents 190 and the terminal devices can adjust their corresponding channel access policies according to the network slice information. The network slice information includes information such as slice identifiers, time slot tables, and channel access policies corresponding to the network slices.

The slice service processing module 144 is configured for checking the slice identifier, and mapping the slice identifier to different service priority information (e.g., QoS service priority). Further, the slice service processing module 144 is configured for associating the service priority information with a channel access policy and resource reservation.

The resource processing module 146 is configured for allocating and reserving a network bandwidth and resource.

Based on the network system shown in FIG. 1, FIG. 4 is a schematic structural diagram of an AP agent 190 according to the present disclosure. The AP agent 190 includes a service information collection module 141, a service information forwarding module 147, a slice information receiving module 148, a slice broadcast module 142, a slice service processing module 144, and a resource processing module 146.

The service information forwarding module 147 is configured for forwarding the service information of the terminal devices connected to the AP agent 190 to an AP controller 140. The slice information receiving module 148 is configured for receiving network slice information (e.g., slice identifier, time slot table, and channel access policy) from other AP agents connected to the AP agent 190 or from an AP controller 140 connected to the AP agent 190, and broadcasting the network slice information to terminal devices connected to the AP agent 190.

The structures and functions of the service information collection module 141, the slice broadcast module 142, the slice service processing module 144, and the resource processing module 146 are the same as those of the service information collection module 141, the slice broadcast module 142, the slice service processing module 144, and the resource processing module 146 in the embodiment shown in FIG. 3, so the details will not be repeated herein.

It can be understood that the AP agent may be a first AP agent, a second AP agent, or a third AP agent, which is not particularly limited herein.

In addition, the virtual slicing mechanism of the WLAN can be realized by the network system, the AP controller, the AP agent, the network slice, and other related structures in the above embodiments, and the AP controller can centrally control and update all network slices, thereby providing deterministic services for the WLAN.

The network system, network slice, AP controller, AP agent, and application scenarios described in the embodiments of the present disclosure are for the purpose of illustrating the technical schemes of the embodiments of the present disclosure more clearly, and do not constitute a limitation to the technical schemes provided in the embodiments of the present disclosure. Those having ordinary skills in the art may know that with the evolution of the network system and the emergence of new application scenarios, the technical schemes provided in the embodiments of the present disclosure are also applicable to similar technical problems.

It can be understood by those having ordinary skills in the art that the network system shown in FIG. 1, the network slice shown in FIG. 2, the AP controller shown in FIG. 3, and the AP agent shown in FIG. 4 do not constitute a limitation to the embodiments of the present disclosure, and more or fewer components than those shown in the figure may be included, or some components may be combined, or a different component arrangement may be used.

Based on the above network system, various embodiments of the data transmission method are proposed below.

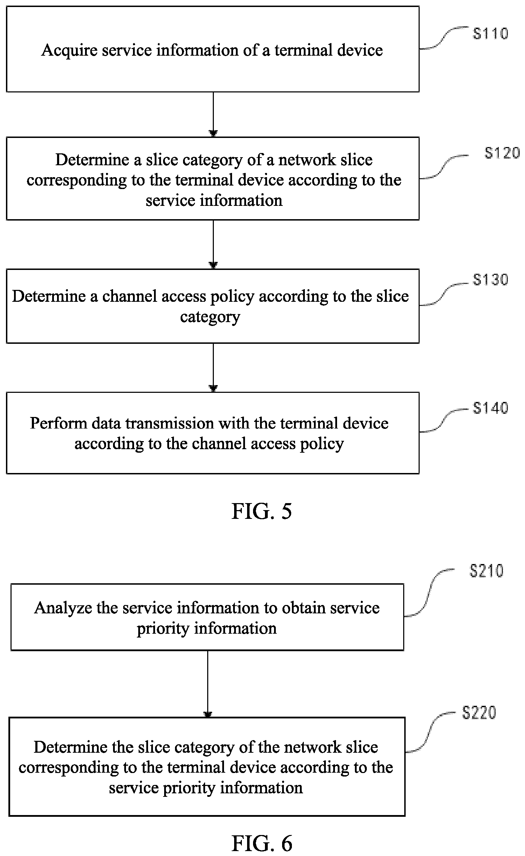

FIG. 5 is a flowchart of a data transmission method according to an embodiment of the present disclosure. The data transmission method may be applied to an AP controller, e.g., the AP controller in the network system shown in FIG. 1 or the AP controller shown in FIG. 3. The data transmission method includes, but not limited to, the following steps S110, S120, S130, and S140.

At S110, service information of a terminal device is acquired.

In an implementation, the service information of the terminal device may be acquired by receiving a probe request frame or a data packet sent by the terminal device, which is not particularly limited herein. In addition, when the terminal device accesses a network where the AP controller is located, the terminal device may send service information to the AP controller. The network may be a WLAN or an extended WLAN (i.e., EasyMesh network), which is not particularly limited herein.

In an implementation, the service information may be voice service information, video service information, game service information, download service information, or the like, which is not particularly limited herein.

In an implementation, the service information includes information such as a service type and a service volume, which is not particularly limited herein.

At S120, a slice category of a network slice corresponding to the terminal device is determined according to the service information.

In a feasible embodiment, the slice category of the network slice may include a network slice providing a low-delay service, a network slice providing a high-throughput service, a network slice providing a stable bandwidth, etc. The network slice providing a low-delay service refers to a network slice having a delay value less than or equal to a preset delay threshold. The network slice providing a high-throughput service refers to a network slice in which a service throughput of service information of a terminal device is greater than a preset throughput. In addition, the network slice providing a low-delay service may perform data transmission for terminal devices according to priorities of service information of the terminal devices, and therefore can ensure the delay of data transmission in the network slice. Channel access duration of the network slice providing a high-throughput service may be longer than channel access duration of network slices of other slice categories. When the service throughput is greater than a preset throughput, the network slice providing a high-throughput service may adjust a transmission opportunity limit (TXOPlimit) value. The network slice providing a stable bandwidth may transmit data using an exclusive channel within a time slice, or may rely on a network band switching technology to guide the terminal device to use a reserved channel in the network slice to transmit data, which is not particularly limited herein. It can be understood that this embodiment can lay a foundation for solving the prior-art problem of excessively long delay or low throughput of a low-priority service due to the preferential channel occupation by a high-priority service in a WLAN, and can provide deterministic network QoS for different terminal devices. The low-priority service refers to a service having a priority lower than or equal to a preset priority. The high-priority service refers to a service having a priority higher than the preset priority. The preset priority, the preset delay threshold, and the preset throughput may be set according to actual requirements, and are not particularly limited herein.

At S130, a channel access policy is determined according to the slice category.

In an implementation, the channel access policy may include a Hybrid Coordination Function Controlled Channel Access (HCCA) mechanism, an EDCA mechanism, etc., which is not particularly limited herein.

The HCCA mechanism is based on a polling mechanism, uses a Hybrid Coordinator (HC) to centrally manage channel access modes of wireless media accesses, is a continuation and extension of a Point Coordination Function (PCF) mechanism, and provides parameterized QoS guarantee. Parameterized QoS means that corresponding QoS parameters are formulated according to the type and characteristics of service information to meet QoS requirements (such as data rate, delay, etc.) of special services. The HCCA mechanism is divided into a contention period (CP) and a contention-free period (CFP). In the CP phase, the EDCA mechanism is used to contend for the channel, and in the subsequent CFP phase, an HC sends a data frame (such as QoS(+)CF-Poll frame) to each terminal device to query whether there is data to be transmitted. A key difference between the HCCA and the PCF lies in that the HCCA can poll each terminal device in the CP phase and can sort data packets based on needs of communication service flows of the terminal devices, and each polling gives the terminal device a data transmission opportunity (TXOP). The TXOP indicates a start time at which and a maximum duration during which the terminal device can send data.

The EDCA mechanism is an extension of a Distributed Coordination Function (DCF) in IEEE 802.11 standards. The EDCA mechanism also implements channel access in a contention-based manner. The EDCA mechanism provides differentiated services and can effectively guarantee QoS of a high-priority service. The high-priority service refers to a service having a priority higher than a preset priority value. The preset priority value may be set according to actual situations. Moreover, the EDCA mechanism is distributed and easy to deploy, and therefore is an important channel access mechanism in WLANs. In the EDCA mechanism, access to at least one communication channel in the WLAN may be contended for by using a contention parameter, such that the terminal device transmits locally stored data on the accessed communication channel.

**Table 1**

| Priority | Priority of terminal device | Name of 802.11d | Access category (AC) | Name |
|---|---|---|---|---|
| Low 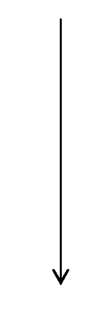 High | 1 | BK | AC_BK | Background |
| | 2 | | AC_BK | Background |
| | 0 | BK | AC_BE | Best Effort |
| | 3 | EE | AC_BE | Best Effort |
| | 4 | CL | AC_VI | Video |
| | 5 | VI | AC_VI | Video |
| | 6 | VO | AC_VO | Voice |
| | 7 | NC | AC_VO | Voice |

As shown in Table 1, four access categories (ACs) are introduced in the EDCA mechanism, and accordingly four corresponding service queues or buffers are introduced to support QoS in the EDCA mechanism. The four access categories are voice (or "AC_VO"), video (or "AC_VI"), best effort (or "AC_BE"), and background (or "AC_BK"). Generally, the four ACs are sorted in a descending order of priorities, i.e., voice (or "AC_VO"), video (or "AC_VI"), best effort (or "AC_BE"), and background (or "AC_BK"). Each AC has a service queue or buffer for storing a corresponding data frame to be transmitted over the network, i.e., a data frame (i.e., MSDU) from an upper layer of a protocol stack is mapped to one of the service queues or buffers of the four ACs and is thus input into the mapped AC buffer.

Each AC has a respective set of queue contention parameters and is associated with a priority value. There are four EDCA contention parameters: Arbitration Inter Frame Space (AIFS), maximum contention window (CWmax), minimum contention window (CWmin), and transmission opportunity limit (TXOPlimit). Table 2 is a table of default values of the EDCA parameters, referring to Table 2, AIFSN represents an AIFS number, and a larger AIFSN value indicates a longer idle waiting time of the terminal device; DSSS and HR/DSSS PHY represent the direct sequence physical layer; and ERP-OFDM of 802.11a/g represents a physical layer standard supported by 802.11a/g.

**Table 2**

| Access category | Minimum contention window | Maximum contention window | AIFSN | Transmission opportunity limit | | |
|---|---|---|---|---|---|---|
| | | | | DSSS and HR/DSSSPHY of 802.11b | ERP-OFDM of 802.11a/g | Other physical layers |
| AC_BK | CWmin | CWmax | 7 | 0 | 0 | 0 |
| AC_BE | CWmin | CWmax | 3 | 0 | 0 | 0 |
| AC_VI | (CWmin+1) /2-1 | CWmin | 2 | 6.016 ms | 3.008 ms | 0 |
| AC_VO | (CWmin+1) /4-1 | (CWmin+ 1)/2-1 | 2 | 3.264 ms | 1.504 ms | 0 |

As can be seen from Table 2, different AIFSs are used for different AC data frames, and the inter-frame space defined in the EDCA mechanism can change with different service types. An AIFS value of a low-priority service is greater than that of a high-priority service, i.e., an air interface waiting time of the low-priority service is longer than that of the high-priority service. The value of the contention window (CW) for entering a backoff process after waiting for the channel to be idle varies with different ACs. For example, after waiting for one AIFS, each backoff process sets a timer to any value in a range of [1, CW+1], which is different from [0, CW] in the DCF. Moreover, different ACs correspond to different maximum contention windows (CWmax) and minimum contention windows (CWmin). The smaller the values of CWmin and CWmax, the higher the priority of service information, and the greater the probability of being granted to access the channel. In addition, the transmission opportunity limit is a maximum duration value of the TXOP. Once a terminal device obtains the TXOP, the terminal device can continuously transmit multiple frames within the transmission opportunity limit value without re-contending for the channel. The interval between the frames is only a Short Inter-frame space (SIFS), which helps improve channel utilization. Therefore, TXOPlimit means the amount of data that the terminal device can send after successfully contending for the channel. A larger TXOPlimit value indicates a longer sending duration.

At S140, data transmission is performed with the terminal device according to the channel access policy.

In this embodiment, by the data transmission method including S110 to S140, an AP controller can acquire service information of a terminal device, then determine a slice category of a network slice corresponding to the terminal device according to the service information, determine a channel access policy according to the slice category, and finally perform data transmission with the terminal device according to the channel access policy. In other words, different network slices are determined according to different service information, corresponding channel access policies are determined for terminal devices of the different network slices, and data transmission is performed with the terminal devices according to the corresponding channel access policies. As such, an objective of providing deterministic services for different terminal devices is achieved. In addition, the problem of unfair contention caused by different service types of service information due to too many terminal devices accessing the WLAN network and the EasyMesh network is also solved, thereby ensuring deterministic network communication. Therefore, the embodiment of the present disclosure can provide support for deterministic services in WLANs.

In an embodiment, when the service information changes, the service information may be re-acquired through a data frame or other means, the slice category of the network slice corresponding to the terminal device is re-determined according to the re-acquired service information, then a channel access policy is determined according to the slice category, and finally data transmission is performed with the terminal device according to the channel access policy. Therefore, in the embodiment of the present disclosure, the service information of the terminal device can be detected in real time, and the channel access policy can be adjusted in a timely manner according to the service information, thereby ensuring deterministic network communication.

In an embodiment, as shown in FIG. 6, S120 is further described. S120 may include, but not limited to, the following steps S210 and S220.

At S210, the service information is analyzed to obtain service priority information.

In an implementation, the service priority information may include an order of priorities of service information of all terminal devices in the network slices, i.e., the service priority information may be information about a descending order of priorities or information about an ascending order of priorities, which is not particularly limited herein.

At S220, the slice category of the network slice corresponding to the terminal device is determined according to the service priority information.

In this embodiment, by the data transmission method including S210 to S220, the AP controller can analyze the service information to obtain the service priority information, and then determine the slice category of the network slice corresponding to the terminal device according to the service priority information, such that in subsequent steps, the channel access policy is determined according to the slice category, and data transmission is performed with the terminal device according to the channel access policy. Therefore, in the embodiment of the present disclosure, the channel access policy can be determined according to the priority of service information, and data transmission can be performed with the terminal device according to the channel access policy in a targeted manner, thereby avoiding an excessively long delay of a low-priority service due to the preferential channel occupation by a high-priority service in a WLAN. The low-priority service refers to a service having a priority lower than or equal to a preset priority. The high-priority service refers to a service having a priority higher than the preset priority. The preset priority may be set according to actual requirements, and is not particularly limited herein.

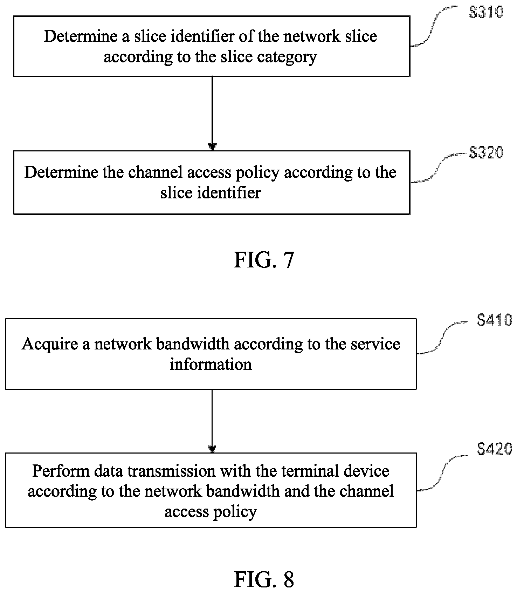

In an embodiment, as shown in FIG. 7, S130 is further described. S130 may include, but not limited to, the following steps S310 and S320.

At S310, a slice identifier of the network slice is determined according to the slice category.

In an implementation, different slice categories correspond to different slice identifiers, and the slice identifier of each slice category is unique, which is not particularly limited herein.

At S320, the channel access policy is determined according to the slice identifier.

In this embodiment, by the data transmission method including S310 to S320, the AP controller can determine the slice identifier of the network slice according to the slice category, and then determine the channel access policy according to the slice identifier. Therefore, in the embodiment of the present disclosure, the slice identifier can be associated with the channel access policy, to facilitate subsequent data transmission with terminal devices in each network slice.

In an embodiment, as shown in FIG. 8, S140 is further described. S140 may include, but not limited to, the following steps S410 and S420.

At S410, a network bandwidth is acquired according to the service information.

In an implementation, the network bandwidth includes a fixed bandwidth, a guaranteed bandwidth, and a maximum bandwidth. The fixed bandwidth is the traffic volume of signaling exchange, such as traffic generated by an operation such as setting, opponent selection, and equipment purchase in a game service, or browsing traffic in a video service. The guaranteed bandwidth is generally set to about twice the average service traffic to ensure normal and smooth data transmission. The maximum bandwidth is generally set to peak service traffic to reduce the packet loss rate, which is not particularly limited herein.

In an embodiment, when the service information is service information requiring high delay, such as voice service information, video service information, game service information, etc., more network bandwidth may be acquired or it may be ensured that the network bandwidth is preferentially allocated to the service information to ensure transmission delay of data corresponding to the service information.

In an embodiment, it is feasible to analyze the service information to obtain the service priority information, allocate a network bandwidth according to the service priority information, and use the network bandwidth to perform data transmission with the terminal device, which is not particularly limited herein.

At S420, data transmission is performed with the terminal device according to the network bandwidth and the channel access policy.

In this embodiment, by the data transmission method including S410 to S420, the AP controller can acquire the network bandwidth according to the service information, and then perform data transmission with the terminal device according to the network bandwidth and the channel access policy, which is not particularly limited herein.

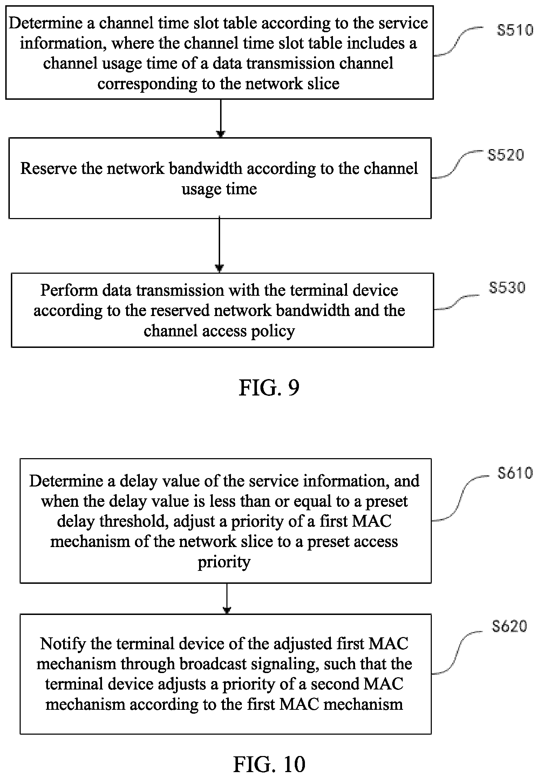

In an embodiment, as shown in FIG. 9, S140 is further described. S140 may include, but not limited to, the following steps S510, S520, and S530.

At S510, a channel time slot table is determined according to the service information, where the channel time slot table includes a channel usage time of a data transmission channel corresponding to the network slice.

It can be understood that the channel usage time includes a usage start time of the channel and a usage end time of the channel. In addition, data communication between the AP controller and terminal devices in the network system is constrained by the channel time slot table to ensure orderly operation of the network slice. For example, the AP controller may periodically broadcast the channel time slot table to all the terminal devices, such that all the terminal devices transmit data under the constraints of the channel time slot table. This is not particularly limited herein.

At S520, the network bandwidth is reserved according to the channel usage time.

It can be understood that during the channel usage time, the AP controller may use the reserved network bandwidth to perform data transmission with the terminal device, thereby ensuring deterministic network communication.

At S530, data transmission is performed with the terminal device according to the reserved network bandwidth and the channel access policy.

In this embodiment, by the data transmission method including S510 to S530, the AP controller can determine a channel time slot table according to the service information, where the channel time slot table includes a channel usage time of a data transmission channel corresponding to the network slice; then reserve the network bandwidth according to the channel usage time; and finally perform data transmission with the terminal device according to the reserved network bandwidth and the channel access policy. Therefore, in the embodiment of the present disclosure, the AP controller can use the reserved network bandwidth to perform data transmission with the terminal device during the channel usage time, thereby ensuring deterministic network communication.

In an embodiment, as shown in FIG. 10, before S140, the data transmission method may further include, but not limited to, the following steps S610 and S620.

At S610, a delay value of the service information is determined, and when the delay value is less than or equal to a preset delay threshold, a priority of a first Medium Access Control (MAC) mechanism of the network slice is adjusted to a preset access priority.

In an implementation, the preset delay threshold may be set according to actual requirements, and the preset access priority may be a highest access priority, which is not particularly limited herein.

At S620, the terminal device is notified of the adjusted first MAC mechanism through broadcast signaling, such that the terminal device adjusts a priority of a second MAC mechanism according to the first MAC mechanism.

It can be understood that the second MAC mechanism is a MAC mechanism of the terminal device.

It can be understood that when the priority of the first MAC mechanism of the network slice is adjusted to a highest priority in a BSS network or an OBSS network, and the terminal device adjusts the priority of the second MAC mechanism according to the first MAC mechanism, the AP controller may perform data transmission with the highest priority in the network slice, i.e., a data packet is transmitted on the contended channel with the highest priority, thereby ensuring the delay of data transmission in the network slice.

In this embodiment, by the data transmission method including S610 to S620, the AP controller can determine the delay value of the service information, adjust the priority of the first MAC mechanism of the network slice to the preset access priority when the delay value is less than or equal to the preset delay threshold, and then notify the terminal device of the adjusted first MAC mechanism through broadcast signaling, such that the terminal device adjusts the priority of the second MAC mechanism according to the first MAC mechanism. Therefore, in the embodiment of the present disclosure, all the terminal devices in the network slice can be notified of the adjusted first MAC mechanism through broadcast signaling, such that each terminal device adjusts the second MAC mechanism to ensure the delay of data transmission in the network slice.

It should be noted that the QoS mechanism adopted by most wireless network devices supporting WLAN access at present is the EDCA technology. This is because the polling-based TXOP allocation algorithm mechanism of HCCA causes a heavy burden to the HC (configured in a QoS AP (QAP), which is an access point of IEEE 802.11e providing QoS), making the implementation mechanism of HCCA complicated. Because HCCA uses traffic specification (TSPEC) to describe a QoS requirement of a traffic stream (TS), the HC determines, according to TSPEC, a start time and a duration of a TXOP allocated thereto and a start time and a duration of a TXOP allocated to the terminal device. However, because HCCA adopts a centralized coordination function and sacrifices the advantages of distributed control of wireless networks, the implementation mechanism of HCCA is complicated in practical applications. Although EDCA uses different TXOP values for services having different priorities, the TXOPlimit value is a fixed value and cannot fully meet requirements of voice, video, and other services with strong real-time performance, and the performance of low-priority services is easily degraded, or even the low-priority service is blocked. The low-priority service refers to a service having a priority lower than a preset priority value. The preset priority value may be set according to actual situations.

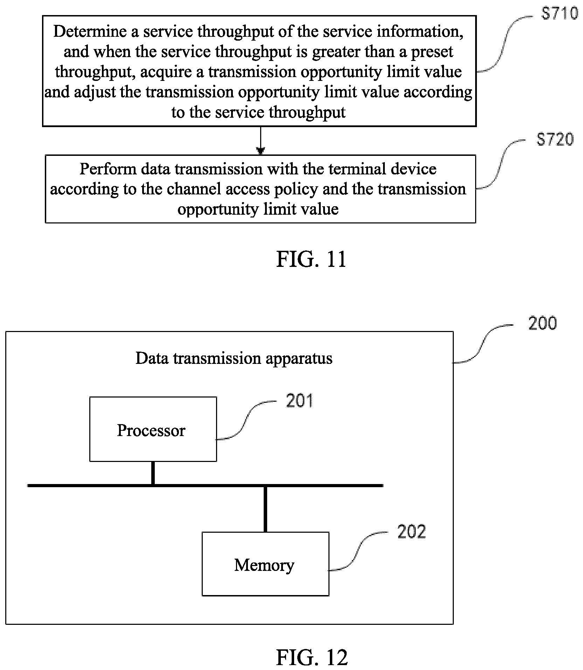

Based on the above analysis, in an embodiment, as shown in FIG. 11, S140 is further described. S140 may include, but not limited to, the following steps S710 and S720.

At S710, a service throughput of the service information is determined, and when the service throughput is greater than a preset throughput, a transmission opportunity limit value is acquired and adjusted according to the service throughput.

In an implementation, the preset throughput may be set according to actual requirements, and is not particularly limited herein.

In an implementation, the transmission opportunity limit value is a maximum duration of TXOP, and the magnitude of the transmission opportunity limit value means the amount of data that the terminal device can transmit after successfully contending for the channel. A larger TXOPlimit value indicates a longer sending duration and a larger amount of data that can be sent. The transmission opportunity limit value may be greater than 6 ms, e.g., 7 ms, 10 ms, or more, which is not particularly limited herein.

At S720, data transmission is performed with the terminal device according to the channel access policy and the transmission opportunity limit value.

In an implementation, the channel access policy may include an HCCA mechanism, an EDCA mechanism, etc., which is not particularly limited herein.

In this embodiment, by the data transmission method including S710 to S720, the AP controller can determine a service throughput of the service information, acquire a transmission opportunity limit value when the service throughput is greater than a preset throughput, adjust the transmission opportunity limit value according to the service throughput, and then perform data transmission with the terminal device according to the channel access policy and the transmission opportunity limit value. Therefore, in the embodiment of the present disclosure, the transmission opportunity limit value can be adjusted to meet requirements of voice, video, and other services with strong real-time performance, to avoid degradation of the performance of the low-priority service or blocking of the low-priority service.

In an implementation, the terminal device may be a mobile phone, a tablet computer, a notebook computer, a handheld computer, a vehicle-mounted electronic device, a wearable device, an Ultra-Mobile Personal Computer (UMPC), a netbook, a Personal Digital Assistant (PDA), or other user equipment having a network access function, which is not particularly limited herein.

In addition, referring to FIG. 12, an embodiment of the present disclosure provides a data transmission apparatus 200, including a memory 202, a processor 201, and a computer program stored in the memory 202 and executable by the processor 201.

The processor 201 and the memory 202 may be connected by a bus or in other ways.

The memory 202, as a non-transitory computer-readable storage medium, may be configured for storing a non-transitory software program and a non-transitory computer-executable program. In addition, the memory 202 may include a high-speed random access memory, and may also include a non-transitory memory, e.g., at least one magnetic disk storage device, flash memory device, or other non-transitory solid-state storage device. In some implementations, the memory 202 may include memories located remotely from the processor 201, and the remote memories may be connected to the processor 201 via a network. Examples of the network include, but not limited to, the Internet, an intranet, a local area network, a mobile communication network, and combinations thereof.

It should be noted that the data transmission apparatus 200 in this embodiment may be, for example, the AP controller in the embodiment shown in FIG. 1, and these embodiments all belong to the same concept and therefore have the same implementation principle and technical effects, so the details will not be repeated here.

The non-transitory software program and instructions required to implement the data transmission apparatus of the foregoing embodiments are stored in the memory 202 which, when executed by the processor 201, cause the processor 201 to implement the data transmission method of the foregoing embodiments, for example, implement the method steps S110 to S140 in FIG. 5, the method steps S210 to S220 in FIG. 6, the method steps S310 to S320 in FIG. 7, the method steps S410 to S420 in FIG. 8, the method steps S510 to S530 in FIG. 9, the method steps S610 to S620 in FIG. 10, or the method steps S710 to S720 in FIG. 11.

The device embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by a processor or controller, for example, by a processor in the device embodiment described above, may cause the processor to implement the data transmission method of the foregoing embodiments, implement the method steps S110 to S140 in FIG. 5, the method steps S210 to S220 in FIG. 6, the method steps S310 to S320 in FIG. 7, the method steps S410 to S420 in FIG. 8, the method steps S510 to S530 in FIG. 9, the method steps S610 to S620 in FIG. 10, or the method steps S710 to S720 in FIG. 11.

In addition, an embodiment of the present disclosure provides a computer program product, including a computer program or computer instructions stored in a computer-readable storage medium, where the computer program or the computer instructions, when read from the computer-readable storage medium and executed by a processor of a computer device, causes the computer device to implement the data transmission method in the above embodiments, for example, implement the method steps S110 to S140 in FIG. 5, the method steps S210 to S220 in FIG. 6, the method steps S310 to S320 in FIG. 7, the method steps S410 to S420 in FIG. 8, the method steps S510 to S530 in FIG. 9, the method steps S610 to S620 in FIG. 10, or the method steps S710 to S720 in FIG. 11.

Embodiments of the present disclosure include: acquiring service information of a terminal device; determining a slice category of a network slice corresponding to the terminal device according to the service information; determining a channel access policy according to the slice category; and performing data transmission with the terminal device according to the channel access policy. In other words, different network slices are determined according to different service information, corresponding channel access policies are determined for terminal devices of the different network slices, and data transmission is performed with the terminal devices according to the corresponding channel access policies. As such, an objective of providing deterministic services for different terminal devices is achieved. Therefore, the embodiments of the present disclosure can provide support for deterministic services in WLANs.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A data transmission method, comprising:
acquiring service information of a terminal device;
determining a slice category of a network slice corresponding to the terminal device according to the service information;
determining a channel access policy according to the slice category; and
performing data transmission with the terminal device according to the channel access policy.

2. The data transmission method of claim 1, wherein determining a slice category of a network slice corresponding to the terminal device according to the service information comprises:
analyzing the service information to obtain service priority information; and
determining the slice category of the network slice corresponding to the terminal device according to the service priority information.

3. The data transmission method of claim 1, wherein determining a channel access policy according to the slice category comprises:
determining a slice identifier of the network slice according to the slice category; and
determining the channel access policy according to the slice identifier.

4. The data transmission method of claim 1, wherein performing data transmission with the terminal device according to the channel access policy comprises:
acquiring a network bandwidth according to the service information; and
performing data transmission with the terminal device according to the network bandwidth and the channel access policy.

5. The data transmission method of claim 4, wherein performing data transmission with the terminal device according to the network bandwidth and the channel access policy comprises:
determining a channel time slot table according to the service information, wherein the channel time slot table comprises a channel usage time of a data transmission channel corresponding to the network slice;
reserving the network bandwidth according to the channel usage time; and
performing data transmission with the terminal device according to the reserved network bandwidth and the channel access policy.

6. The data transmission method of claim 1, wherein before performing data transmission with the terminal device according to the channel access policy, the data transmission method further comprises:
determining a delay value of the service information, and in response to the delay value being less than or equal to a preset delay threshold, adjusting a priority of a first Medium Access Control (MAC) mechanism of the network slice to a preset access priority; and
notifying the terminal device of the adjusted first MAC mechanism through broadcast signaling, such that the terminal device adjusts a priority of a second MAC mechanism according to the first MAC mechanism.

7. The data transmission method of claim 1, wherein performing data transmission with the terminal device according to the channel access policy comprises:
determining a service throughput of the service information, and in response to the service throughput being greater than a preset throughput, acquiring a transmission opportunity limit value and adjusting the transmission opportunity limit value according to the service throughput; and
performing data transmission with the terminal device according to the channel access policy and the transmission opportunity limit value.

8. The data transmission method of claim 1, further comprising:
reacquiring the service information in response to a change of the service information.

9. A data transmission apparatus, comprising: a memory, a processor, and a computer program stored in the memory and executable by the processor, wherein the computer program, when executed by the processor, causes the processor to perform the data transmission method of any of claims 1 to 8.

10. A computer-readable storage medium, storing computer-executable instructions which, when executed by a computer, cause the computer to perform the data transmission method of any of claims 1 to 8.

11. A computer program product, comprising a computer program or computer instructions stored in a computer-readable storage medium, wherein the computer program or computer instructions, when read from the computer-readable storage medium and executed by a processor of a computer device, causes the computer device to perform the data transmission method of any of claims 1 to 8.
